(19) Europäisches Patentamt
European Patent Office
Office européen des brevets

(11) **EP 4 210 155 A1**

(12) **EUROPEAN PATENT APPLICATION**

(43) Date of publication:
**12.07.2023 Bulletin 2023/28**

(21) Application number: **22305013.9**

(22) Date of filing: **07.01.2022**

(51) International Patent Classification (IPC):
**H01M 12/08** (2006.01)    **H01M 10/0569** (2010.01)
**H01M 10/0565** (2010.01)   **H01M 10/052** (2010.01)
**H01M 4/38** (2006.01)       **H01M 4/86** (2006.01)
**H01M 4/96** (2006.01)       **H01M 10/0568** (2010.01)

(52) Cooperative Patent Classification (CPC):
**H01M 12/08; H01M 10/052; H01M 10/0565;
H01M 10/0569;** H01M 4/382; H01M 4/8605;
H01M 4/96; H01M 10/0568; H01M 2220/10;
H01M 2220/20; H01M 2220/30; H01M 2300/0028;
H01M 2300/0085

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA
Toyota-shi, Aichi-ken, 471-8571 (JP)**
• **Universidad Del Pais Vasco
Euskal Herriko Unibertsitatea
48940 Leioa (Vizcaya) (ES)**

(72) Inventors:
• **CASTRO, Laurent
1140 BRUSSELS (BE)**

• **GUEGUEN, Aurélie
1140 BRUSSELS (BE)**
• **COTTE, Stéphane
1140 BRUSSELS (BE)**
• **ALVAREZ TIRADO, Marta
48940 LEIOA (VIZCAYA) (ES)**
• **MECERREYES, David
48940 LEIOA (VIZCAYA) (ES)**
• **VAUTHIER, Soline
48940 LEIOA (VIZCAYA) (ES)**
• **PORCARELLI, Luca
48940 LEIOA (VIZCAYA) (ES)**
• **CASADO, Nerea
48940 LEIOA (VIZCAYA) (ES)**

(74) Representative: **Cabinet Beau de Loménie
158, rue de l'Université
75340 Paris Cedex 07 (FR)**

(54) **LOW TOXICITY ETHER-BASED ELECTROLYTE COMPOSITION AND METAL-AIR BATTERY COMPRISING THE SAME**

(57)     The present invention relates to an ether-based electrolyte composition comprising:
(A) at least one solvent of formula (1):

$$RO-CH_2-CH(OR')-CH_2-OR''     (1)$$

wherein: R, R' and R", identical or different, are $C_{1-6}$ alkyl chains, and preferably $CH_3$; and
(B) at least one alkali metal salt.

The invention also concerns the use of a compound of formula (1) as a solvent in an electrolyte composition for metal-air battery.

A metal-air battery comprising a separator soaked by a liquid (nonaqueous) electrolyte medium arranged between the negative and positive electrodes, or a metal-air battery comprising a crosslinked-gel polymer electrolyte interposed between the negative and positive electrodes, is also part of the invention.

The invention also concerns a battery pack comprising at least two metal-air battery cells according to the invention. The use of a battery pack according to the invention as a rechargeable battery for electric vehicles and hybrid vehicles, electronic devices, and stationary power generating devices, is also part of the invention. Finally, the invention is directed at a vehicle, an electronic device, and a stationary power generating device, and preferably cars, bikes, scooters and drones, comprising a battery pack according to the invention.

EP 4 210 155 A1

**Figure 1**

**Description**

Field of the invention

The present invention relates to an ether-based electrolyte composition which can in particular be used in a metal-air battery, and more particularly in a lithium-air battery. The electrolyte composition of the invention comprises at least one solvent deriving from glycerol and at least one alkali metal salt.

Background to the invention

In recent years, with the rapid spread of information-related devices and communication devices such as personal computers, camcorders and cellular phones, it has become important to develop a battery for use as a power source for such devices. In the automobile industry, the development of high-power and high-capacity batteries for electric vehicles and hybrid vehicles has been promoted. Among various kinds of batteries, rechargeable lithium batteries have attracted attention due to their high energy density and high power. Especially, rechargeable lithium-air batteries have attracted attention as a rechargeable lithium battery for electric vehicles and hybrid vehicles, and especially for devices related to mobility, which is required to have high energy density.

Rechargeable lithium-air batteries use oxygen in the air as a cathode active material. Therefore, compared to conventional lithium rechargeable batteries containing a transition metal oxide (e.g. lithium cobaltate), as a cathode active material, rechargeable lithium-air batteries are able to have larger capacity as much as the specific surface of carbon used as catalyst support allowed.

In metal-air batteries, the cathode active material, oxygen, is not contained within the battery. Instead, this material is provided by the surrounding atmosphere. Naturally, such a system allows in principle a very high specific energy (energy provided by the battery per unit weight, typically given in Wh/kg in this technical field). In such batteries, oxygen may be partially reduced to peroxide, or fully reduced to hydroxide or oxide depending on the catalyst, electrolyte, availability of oxygen, etc. Especially, in lithium-air batteries, when the negative electrode (anode) is lithium (Li) metal or any lithium alloys, lithium peroxide ($Li_2O_2$) or lithium oxide ($Li_2O$) may be formed at the positive electrode side.

A metal-air battery contains in general the following parts:

- a metal anode (e.g. containing a metal M),
- a non-aqueous electrolyte (e.g. containing a metal M salt), and
- an air cathode.

Other parts of the battery device may be present such as: current collectors on the anode and/or cathode side; a separator between the cathode-side electrolyte (catholyte) and anode-side electrolyte (anolyte); a barrier layer between a positive electrode (cathode) and electrolyte, or between a negative electrode (anode) and electrolyte.

US 5,272,022 discloses a non-aqueous electrolyte secondary battery employing an anode formed of a carbonaceous active material, in which a mixture of a non-aqueous solvent selected from the group consisting of an acyclic carbonate material, a cyclic carbonate material, γ-butyrolactone, and acetonitrile, and a second non-aqueous solvent, such as 1,2-diethoxyethane and 1,2-dimethoxyethane are used for an electrolytic solution. The non-aqueous electrolyte secondary battery provides enhanced cycling properties when used together with an anode containing a carbonaceous material. However, the non-aqueous electrolyte secondary battery still needs improvements, in particular in terms of electrode stability and low toxicity.

WO 2019/128643 discloses a solid electrolyte with channels that have a spatial configuration matching conductive particles so as to specifically identify the conductive particles. The preparation method for the solid electrolyte comprises the steps of: 1) adding, to a solvent, a functional monomer, conductive particles, an initiator, and a crosslinking agent for crosslink polymerization, the functional monomer comprising a polymerization monomer and lithium salt, such that a polymer network structure wrapping the lithium salt and the conductive particles is formed; 2) removing the conductive particles in the polymer network structure using an eluent; 3) removing the solvent to obtain a solid electrolyte, the solid electrolyte having channels that have a spatial configuration matching the conductive particles to specifically identify the conductive particles. However, the removing of the solvent adds an additional step to the preparation of the solid electrolyte which makes the process quite complicated. In addition, the solid electrolyte obtained by this process cannot be a gel, and therefore cannot be used to entrap a liquid electrolyte, and in particular a low toxicity liquid electrolyte.

Among known electrolytes for metal-air batteries, the following problems need to be addressed:

- lowering hysteresis by decreasing charging voltage and/or increasing discharge voltage of the metal-air battery by improving the reaction rate during charge and discharge;
- increasing capacity of the metal-air battery at a fixed rate;

- avoiding dendrites which form on the surface of a metal electrode and lead to shorting out and a reduced lifespan of the battery; and
- improving materials safety (e.g. low toxicity).

Summary of the invention

In order to remedy problems associated with known electrolytes for metal-air batteries, the present invention proposes an ether-based electrolyte composition comprising:

(A) at least one solvent of formula (1):

$$RO-CH_2-CH(OR')-CH_2-OR'' \qquad (1)$$

wherein: R, R' and R'', identical or different, are $C_{1-6}$ alkyl chains; and
(B) at least one alkali metal salt,

the solvent of formula (1) being derived from a "green", natural and non-toxic material: glycerol, which constitutes an alternative to toxic solvents such as diglyme usually synthetized from ethylene oxide sourced from natural gas of petroleum.

The electrolyte composition of the invention can be used both in a metal-air battery comprising a separator soaked by a liquid (non-aqueous) electrolyte medium arranged between the negative and positive electrodes, and in a metal-air battery comprising a crosslinked-gel polymer electrolyte interposed between the negative and positive electrodes.

The electrolyte composition of the invention has been observed experimentally to provide:

- Higher ionic conductivity for both liquid and crosslinked gel polymer electrolytes,
- Lower hysteresis by decreasing charging voltage and/or increasing discharge voltage which has a beneficial effect on cyclability since degradation of electrolyte is avoided under limiting capacity mode,
- Higher protection of metal anode from dendrites formation during charge/discharge cycling,
- Improvement of the metal-air cell performances by decreasing the polarization of the cell,
- Lower toxicity of metal-battery electrolyte, especially for humans and environment.

Brief description of the figures

**Figure 1** shows a scheme for obtaining a crosslinked gel polymer electrolyte according to the invention.
**Figure 2** shows a scheme of Li-Li cells with liquid electrolytes and used for galvanostatic discharge / charge cycling performed at 0.1 mA/cm$^2$.
**Figure 3** shows a scheme of Li-Li cells with crosslinked gel polymer electrolytes and used for galvanostatic discharge / charge cycling performed at 0.1 mA/cm$^2$.
**Figure 4** shows a scheme of Li-O$_2$ cells with a liquid electrolyte and used for galvanostatic discharge / charge cycling performed at 0.1 mA/cm$^2$.
**Figure 5** shows a scheme of Li-O$_2$ cells with a crosslinked gel polymer electrolyte and used for galvanostatic discharge / charge cycling performed at 0.1 mA/cm$^2$.
**Figure 6** shows ionic conductivities for electrolyte compositions according to the invention and comparative ones, obtained by Electrochemical Impedance Spectroscopy (EIS).
**Figure 7** illustrates the discharge-charge cycling performances of Li/Li cells respectively with liquid and crosslinked gel polymer electrolytes, performed at 0.1 mA/cm$^2$.
**Figure 8** illustrates the discharge-charge cycling performances of Li-O$_2$ cells with electrolytes according to the invention, performed at 0.1 mA/cm$^2$.
**Figure 9** illustrates the discharge-charge cycling performances of Li-O$_2$ cells with comparative electrolytes, performed at 0.1 mA/cm$^2$.

Detailed description of the invention

The present invention relates to an ether-based electrolyte composition which can in particular be used in a metal-air battery, and more particularly in a lithium-air battery, comprising:

- a negative electrode containing a negative-electrode active material;
- a positive electrode using oxygen as a positive-electrode active material; and
- an electrolyte medium arranged between the negative electrode and the positive electrode;

wherein the electrolyte medium comprises the electrolyte composition of the invention.

<Anode>

In a metal-air battery according to the present invention, such as a lithium-air battery, the negative electrode (which may also be referred to as "anode" hereinafter) comprises at least an anode active material (which may also be referred to as "negative electrode active material" hereinafter). As the anode active material, general anode active materials for metal batteries such as lithium batteries can be used and the anode active material is not particularly limited. In general, the anode active material is able to store/release a metal ion ($Li^{+'}$ $Na^{+'}$ $K^+$...), $Li^+$ ions being present in Li-air batteries, $Na^+$ ions in Na-air batteries etc. Specific anode active materials are, for example, metals such as Li, Na, K, Ca, Mg, alloys, oxides and nitrides of the metals, and carbonaceous materials. In general, the anode active material is able to store/release a lithium ion ($Li^+$).

Specific anode active materials for rechargeable lithium-air batteries are, for example, a lithium metal, lithium protected anodes, lithium alloys such as a lithium-aluminum alloy, a lithium-tin alloy, a lithium-lead alloy and a lithium-silicon alloy, metal oxides such as a tin oxide, a silicon oxide, a lithium-titanium oxide, a niobium oxide and a tungsten oxide, metal sulfides such as a tin sulfide and titanium sulfide, metal nitrides such as a lithium-cobalt nitride, a lithium-iron nitride and a lithium manganese nitride, and carbonaceous materials such as graphite. Of these, lithium metal is preferred.

By "lithium-protected anode", reference is made here for example (but is not limited to) to a "Lithium Protected Electrode" (LPE) as described by Visco et al. (Polyplus). Usually the Li is covered by a solid electrolyte (for example NASICON with formulae $LiM_2(PO_4)_3$ or LiSiCON related to the $\gamma$-$Li_3PO_4$ crystal structure). Between the solid electrolyte and the Li metal, there is usually an interlayer (for example consisting of $Cu_3N/Li_3N$). In LPE systems, Li metal can be attached directly to one side of solid electrolyte material, or alternatively a small amount of solvent containing a Li salt electrolyte may be added between the solid electrolyte material and the Li metal to ensure Li ionic conductivity. Such materials have been described in, for example, US 7 282 295 and US 7 491 458.

When a metal, alloy or the like in the form of foil or metal is used as the anode active material, it can be used as the anode itself.

The anode is required to contain at least an anode active material; however, as needed, it can contain a binder for fixing the anode active material. The type and usage of the binder are the same as those of the air cathode described hereinafter, so that they will not be described here.

An anode collector may be connected to the anode, which collects current from the anode. The material for the anode collector and the shape of the same are not particularly limited. Examples of the material for the anode collector include stainless steel, copper and nickel. Examples of the form of the anode collector include a foil form, a plate form and a mesh (grid) form.

In the metal-air, e.g. lithium-air, particularly preferred anode materials are one or more of the following: Li metal, Li alloy such as $Si_xLi_y$, $Sn_xLi_y$, $Sb_xLi_y$, $Sn_xSb_yLi_z$, $C_xLi_y$, , $In_xLi_y$, $Al_xLi_y$, or lithiated oxide such as $Li_4Ti_5O_{12}$, $TiNb_2O_7$, $Nb_{16}W_5O_{55}$ or $Nb_{18}W_{16}O_{93}$. Combinations of these materials can be used.

<Cathode>

In the metal-air of the invention, the positive electrode (which may also be referred to as "cathode" hereinafter) comprises at least a cathode active material (which may also be referred to as "positive electrode active material" hereinafter). As the cathode active material, general cathode active materials for metal batteries can be used and the cathode active material is not particularly limited.

In the metal-air, e.g. lithium-air, battery of the present invention, the positive electrode uses oxygen as a positive-electrode active material. Oxygen serving as the positive-electrode active material may be contained in air or oxygen gas.

In the metal-air, e.g. lithium-air, battery of the present invention, the positive electrode may be a component in which the redox catalyst is supported on a carrier. An example of the carrier is carbon. Examples of carbon include carbon blacks, such as Ketjen Black, acetylene black, channel black, furnace black, lamp black, and thermal black; graphite, such as natural graphite, e.g., scaly graphite, artificial graphite, and expanded graphite; activated carbon from charcoal and coal; carbon foam; carbon fibers obtained by carbonizing synthetic fibers and petroleum pitch-based materials; carbon nanofibers; molecular carbon such as fullerenes; and tubular carbon, such as carbon nanotubes. Modified carbons such as N-doped carbon may also be used.

Positive electrode materials can also be used in a metal-air, e.g. lithium-air, battery of the present invention based on materials other than carbon. For example, positive electrode materials based on metal foam, stable and conductive metal oxides, or steel, can be used.

In the present invention, where carbon is used, it is preferably a porous material in the form of a powder and preferably has a high specific surface area of 20 to 2000 $m^2/g$, preferably 60 to 2000 $m^2/g$, and most preferably 60 to 1500 $m^2/g$. For example, carbon may be used upon which a treatment is performed by a general method to increase porosity or surface area, followed by another treatment to increase the wettability. Examples of the commercial carbon products which can be used in the present invention include the KS series, SFG series, Super P series and Super S series available from TIMCAL Ltd., activated carbon products available from Norit, Black Pearl and AB-Vulcan 72 available from Cabot, and KB-ECP and KB-ECP600JD available from Nouryon. Other examples of commercially available carbon include the WAC powder series available from Xiamen All Carbon Corporation, PW15-type, J-type and S-type Activated Carbons available from Kureha, and Maxsorb MSP-15 available from Kansai Netsu Kagaku.

Examples of the method for increasing the porosity, surface area and wettability of the carbon include physical activation or chemical activation. The chemical activation method includes, for example, immersing the carbon material in a strong alkaline aqueous solution (potassium hydroxide solution for example), in an acid solution (nitric acid or phosphoric acid for example) or in a salt (zinc chloride for example). This treatment can be followed (but not necessarily) by a calcination step at relatively low temperature (450°C to 900°C for example).

In addition, the carbon preferably has pores having a pore diameter of 5 nm or more, preferably 20 nm or more. The specific surface area of the carbon and the pores size can be measured by the BET method or the BJH method, for example. Furthermore, in general, the carbon preferably has an average particle diameter (primary particle diameter) of 8 to 350 nm, more preferably 30 to 50 nm. The average primary particle diameter of the carbon can be measured by TEM.

The carbon used in the present invention may show any one of the above-mentioned preferred ranges for specific surface area, pore diameter or particle diameter. Preferred carbon in the framework of the invention includes carbon showing a preferred range for just one of these types of physical feature, or carbon showing preferred ranges for two of the features, or carbon showing preferred ranges for each of the three features of specific surface area, pore diameter or particle diameter.

Among forms of carbon that can be used in the present invention are: Super P® Li (Timcal) showing a particle size of 40 nm and a specific surface area (determined by the Brunauer Emmet & Teller method) of 62 $m^2/g$; Black Pearl® 2000 (from Cabot Corporation) showing a particle size of 12 nm and a Specific Surface Area (determined by the Brunauer Emmet & Teller method) of 1487 $m^2/g$; Ketjen Black® EC-600JD (from AzkoNobel) showing a specific surface area (determined by the Brunauer Emmet & Teller method) of 1400 $m^2/g$.

In metal-air batteries such as lithium-air batteries, a catalyst is commonly added to the cathode. The use of a catalyst is not absolutely essential for a metal-air battery to fulfill its function but a catalyst may have positive effects e.g. for a lithium-air battery, a catalyst may help the $Li_2O_x$ decomposition during the charging/oxidation process.

In a preferred embodiment therefore, the positive electrode has a catalyst content of 0.01% to 60% by weight, preferably 55% by weight or less, and more preferably 0.01% to 50% by weight with respect to the total weight of the positive electrode. A preferred quantity of catalyst is from 0.1% to 30% by weight, preferably 1% to 25% by weight, and more preferably 2% to 20% by weight, or even more preferably 3% to 15% by weight with respect to the total weight of the positive electrode. At a catalyst content of 0.01% by weight or more, the effect of the catalyst is sufficiently exhibited. At a catalyst content of 60% by weight or more, the proportions of other components such as a conductive material and a binder incorporated in the positive electrode tend to be too low, thus giving rise to possible reductions in conductivity and mechanical strength.

Types of catalyst material that can be used in a metal-air, e.g. lithium-air, battery according to the present invention include: transition metal oxides such as $MnO_2$ in various forms, preferably $\alpha$-type, $Co_3O_4$, $Fe_2O_3$, $CuO$, $LiCoO_2$, mixed transition metal oxides such as $NiFe_2O_4$, $CoFe_2O_4$, $MnFe_2O_4$, Co phthalocyanine ($C_{36}H_{16}CoN_8$), metals (Mn, Co, Ru, Pt, Ag, CoMn, Au).

This catalyst may be dispersed / deposited onto the carbon to increase its efficiency. Air cathodes prepared using carbon on which catalyst is dispersed / deposited may also be used in combination with the electrolyte of the present invention.

In the metal-air, e.g. lithium-air, battery of the present invention, the positive electrode may contain a conductive material, in addition to the carbon and non-carbon materials discussed above. Examples of such further conductive materials include conductive fibers such as metal fibers; metal powders, such as silver, nickel, aluminum powders; and organic conductive materials such as polyphenylene derivatives. These may be used separately or in combination as a mixture.

Moreover, the positive electrode may contain lithium oxide or lithium peroxide.

In the metal-air, e.g. lithium-air, battery of the present invention, the positive electrode may contain a binder. The binder is not particularly limited. The binder may be composed of a thermoplastic resin or a thermosetting resin. Examples thereof include polyethylene, polypropylene, polytetrafluoroethylene (PTFE), polyvinylidene fluoride (PVDF), styrene-butadiene rubber (SBR), tetrafluoroethylene-hexafluoropropylene copolymers, tetrafluoroethylene-hexafluoropropylene copolymers (FEP), tetrafluoroethylene-perfluoroalkyl vinyl ether copolymers (PFA), vinylidene fluoride-hexafluoropropylene copolymers, vinylidene fluoride-chlorotrifluoroethylene copolymers, ethylene-tetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, and ethylene-acrylic acid copolymers. Copolymers having sulfonate group-terminated perfluorovinyl ether groups attached to a poly(tetrafluoroethylene) backbone, such as those commonly referred to as Nafion®, may also be envisaged as polymer binder materials in the present invention. These materials may be used separately or in combination as a mixture.

In general, in advantageous embodiments of the present invention, an air cathode collector is connected to the air cathode, which collects current from the air cathode. The material for the air cathode collector and the shape of the same are not particularly limited. Examples of the material for the air cathode collector include stainless steel, aluminum, iron, nickel, titanium and carbon. Examples of the form of the air cathode collector include a foil form, a plate form, a mesh (grid) form and a fibrous form. Preferably, the air cathode collector has a porous structure such as a mesh form since the collector having a porous structure has excellent efficiency of oxygen supply to the air cathode.

In some embodiments, the air electrode (air cathode) further comprises hydrophobic hollow fibers. A hydrophobic fiber tends to generate a space between itself and the electrolyte. These spaces facilitate $O_2$ diffusion in the air electrode, enabling a thicker electrode to be used. Typically carbon-based air electrodes are 0.5 to 0.7 mm thick. Addition of hydrophobic fibers allows use of electrodes that are at least 1 mm thick. Suitable fibers include DuPont HOLLOFIL® (100% polyester fiber with one more holes in the core), goose down (very small, extremely light down found next to the skin of geese), PTFE fiber, and woven hollow fiber cloth, among others. KETJENBLACK® carbon can also be coated on these fibers.

In the present invention, particularly preferred cathode materials are one or more of the following: carbon (e.g. Super C65, Ketjen black, Vulcan XC-72 CNT), $MnO_2$, $RuO_2$, $LaFeO_3$, $NiCO_2O_4$, Au, Ir, graphene, reduced graphene oxide (rGO). Combinations of these materials can be used.

< Electrolyte>

The ether-based electrolyte composition of the present invention comprises:

(A) at least one solvent of formula (1):

$$RO-CH_2-CH(OR')-CH_2-OR'' \qquad (1)$$

wherein: R, R' and R", identical or different, are $C_{1-6}$ alkyl chains, and preferably $CH_3$; and
(B) at least one alkali metal salt.

In the sense of the invention, the term "alkyl" means a saturated, linear or branched, $C_1$-$C_6$, preferably $C_1$-$C_4$, and more preferably $CH_3$, hydrocarbon-based aliphatic group. The term "branched" means that, when the alkyl chain is a $C_{3-6}$ alkyl chain, at least one lower alkyl group such as methyl or ethyl is carried by a linear alkyl chain. As the alkyl group, there may be mentioned, for example, methyl, ethyl, n-propyl, i-propyl, n-butyl, t-butyl, i-butyl, s-butyl and n-pentyl.

In a preferred embodiment, the solvent of formula (1) is 1,2,3-trimethoxypropane (1,2,3-TMP).

WO 2013/050717 describes a method for preparing compounds of formula (1) deriving from glycerol, in the presence of a methylating agent and a phase-transfer catalyst in a basic medium. Such compounds are already known from the prior art, but not for their use as solvent in electrolyte compositions for metal-air battery cells.

The electrolyte composition of the invention may comprise one or more additional co-solvents capable of storing and transporting ions, so long as the co-solvent(s) is substantially electrochemically and chemically unreactive with respect to the anode and the cathode, and the co-solvent(s) facilitate the transport of ions between the anode and the cathode. In a preferred embodiment, the co-solvent(s) is selected from the group consisting of: chain carbonates, cyclic ester carbonates, chain ethers, cyclic ethers, glycol ethers, and nitrile solvents, and preferably glycol ethers such as tetraethylene glycol dimethyl ether (TEGDME).

When a co-solvent is present in the electrolyte composition of the invention, the weight ratio between the solvent of formula (1) and the co-solvent(s) may be:
x solvent of formula (1) / (1 - x) co-solvent(s),
wherein: $0 < x \le 1$.

In a preferred embodiment, the weight ratio between the solvent of formula (1) and the co-solvent(s) may vary from 10/90 to 90/10, and more preferably from 50/50 to 90/10.

In the metal-air battery of the invention, the ion-conducting (electrolyte) medium arranged between the negative electrode and the positive electrode may contain an alkali metal salt (B) selected from the group consisting of lithium salt, sodium salt, potassium salt, calcium salt and magnesium salt.

In a lithium-air battery, the alkali metal salt (B) is a lithium salt. In a preferred embodiment, the lithium salt (B) is selected from the group consisting of: LiTFSI, $LiPF_6$, $LiBF_4$, $LiClO_4$, LiFSI, LiBOB $LiAsF_6$, LiFAP, LiTriflate, LiDMSI, LiHPSI, LiBETI, LiDFOB, LiBFMB, LiBison, LiDCTA, LiTDI, LiPDI. In a particularly preferred embodiment, the lithium salt (B) is LiTFSI.

In the electrolyte composition of the invention, the alkali metal salt (B) is advantageously dissolved in the solvent of formula (1) in a concentration ranging from 0.05 to 5 $mol.L^{-1}$, and more advantageously from 0.5 to 1.5 $mol.L^{-1}$.

In the present invention, it is possible to add further additives to the electrolyte composition, especially to provide a better metal/electrolyte interface. Such optional further additives may for example include one or more of:

- catalysts such as metal oxides (e.g. $NiO_x$, $CoO_x$, $FeO_x$, $MnO_x$) or metallic carbides and nitride composites (e.g. boron-carbide-supported ruthenium (Ru/B4C), $MO_2C$/CNTs, and Co4N/carbon nanofiber);
- glass nano fibers, cellulose filler, rice grains, soy fibers, coconut fibers, starch grains, oyster shell, mussel shell, crustacean shell with a particle size from 10 nm to 100 $\mu$m;
- ceramic filler ($SiO_2$, $TiO_2$, $Al_2O_3$, MgO, $ZrO_2$, CaO, BaO, $La_2O_3$, $Bi_2O_3$, $Ga_2O_3$, $Cr_2O_3$, $Ta_2O_5$, $V_2O_5$, $P_2O_5$, $Mg_3Al_2Si_3O_{12}$, $Fe_3Al_2Si_3O_{12}$, $Ca_3Fe_2Si_3O_{12}$, $Ca_3Al_2Si_3O_{12}$, $Ca_3Cr_2Si_3O_{12}$), fillers such as lithium lanthanum zirconium oxide (LLZO), lithium lanthanum zirconate (LTAP), or sand grain, with a particle size from 10 nm to 100 $\mu$m;
- binding agents such as: polyvinylidene fluoride (PVdF), styrene-butadiene rubber (SBR), carboxymethyl cellulose (CMC), polytetrafluoroethylene (PTFE);
- optionally, some surfactants can be added along with some processing aids. Possible examples of classes of appropriate surfactant include non-ionic surfactants such as alkyl polyglycosides or poloxamers.

The electrolyte composition of the invention may contain additives, especially to provide a better metal/electrolyte interface. In particular, the electrolyte composition may contain redox mediators, catalysts, glass nano fibers, fillers such as lithium lanthanum zirconium oxide (LLZO), lithium lanthanum zirconate (LTAP), $Al_2O_3$, $TiO_2$, $SiO_2$, $ZrO_2$, etc.

The electrolyte composition of the invention can be used in a metal-air battery comprising a non-aqueous liquid electrolyte medium arranged between the negative and positive electrodes, or in a metal-air battery comprising a crosslinked-gel polymer electrolyte interposed between the negative and positive electrodes.

Therefore, in a first embodiment, the electrolyte composition of the invention is in a liquid form.

When the electrolyte is liquid, a physical separator between the electrodes is necessary to avoid short circuits.

In this first embodiment, the metal-air battery cell thus comprises:

- a negative electrode containing a negative-electrode active material,
- a positive electrode using oxygen as a positive-electrode active material, and
- a separator interposed between the negative electrode and the positive electrode,

wherein the separator is soaked by an electrolyte composition according to the invention which is in a liquid form.

In a second embodiment, the electrolyte composition is in the form of a crosslinked gel polymer, preferably a thermally or UV-crosslinked gel polymer, and more preferably a UV-crosslinked gel polymer.

In this second embodiment, the electrolyte composition further comprises:

- at least one crosslinker monomer, and
- at least one photoinitiator or radical initiator.

In this second embodiment, the crosslinker monomer is advantageously an $\alpha,\beta$-unsaturated carbonyl monomer, and more advantageously a (meth)acrylate monomer, an anhydride or a (meth)acrylamide monomer. In a preferred embodiment, the crosslinker monomer is a (meth)acrylate monomer, more preferably a mono-, di- or tri-(meth)acrylate monomer, and even more preferably an ester of (meth)acrylic acid with a linear or branched, alicyclic, aromatic or heterocyclic ($C_2$-$C_{24}$)alcohol, or an ester of (meth)acrylic acid with a ($C_2$-$C_{24}$)polyethylene glycol. In a particularly preferred embodiment, the mono-, di- or tri-(meth)acrylate monomer is selected from the group consisting of:

- an ester of mono-, di- or tri-(meth)acrylic acid with a ($C_2$-$C_{24}$)polyethylene glycol preferably selected from the group consisting of diethylene glycol di(meth)acrylate, poly(ethylene glycol) methyl ether acrylate, poly(ethylene glycol) di(meth)acrylate, tetra(ethylene glycol) di(meth)acrylate, tri(ethylene glycol) di(meth)acrylate, ethylene glycol di(meth)acrylate, and mixtures thereof,
- an ester of mono-, di- or tri-(meth)acrylic acid with a ($C_2$-$C_{24}$) alcohol preferably selected from 1,3-butanediol di(meth)acrylate, 1,4-butanediol di(meth)acrylate, 1,5-pentanediol di(meth)acrylate, 1,6-hexanediol di(meth)acrylate, glycerol di(meth)acrylate, pentaerythritol tri(meth)acrylate, glycerol tri(meth)acrylate, trimethylolpropane tri(meth)acrylate, trimethylolpropane tri(meth)acrylate, trimethylolpropane ethoxylate tri(meth)acrylate, trimethylolpropane propoxylate tri(meth)acrylate, pentaerythritol tri(meth)acrylate, glycerol tri(meth)acrylate, pentaerythritol tetra(meth)acrylate, di-trimethylolpropane tetra(meth)acrylate, dipentaerythritol penta(meth)acrylate, dipentaerythritol hexa(meth)acrylate, and mixture thereof,
- a ester of mono-, di- or tri-(meth)acrylic acid with a $(C_2$-$C_{24})$perfluorinated compound, preferably selected from 2,2,3,3,4,4,5,5,6,6,7,7-dodecafluoroheptyl (meth)acrylate, 2,2,3,3-tetrafluoropropyl (meth)acrylate 2,2,3,4,4,4-hexafluorobutyl (meth)acrylate, 1,1,1,3,3,3-hexafluoroisopropyl (meth)acrylate, octafluoropentyl(meth)acrylate, pentafluorobenzyl (meth)acrylate, 1H,1H-pentadecafluoro-n-octyl (meth)acrylate, pentafluorophenyl (meth)acrylate, 1H,1H,2H,2H-nonafluorohexyl (meth)acrylate, 2,2,3,3,4,4,4-heptafluorobutyl (meth)acrylate, 1H,1H,2H,2H-heptadecafluorodecyl (meth)acrylate, 1H,1H,2H,2H-tridecafluoro-n-octyl (meth)acrylate, 1,6-bis(acryloyloxy)-2,2,3,3,4,4,5,5-octafluorohexane, 2,2,2-trifluoroethyl (meth)acrylate, methyl 2-fluoro(meth)acrylate, and mixtures thereof.

In this second embodiment, the most preferred crosslinker monomer is an ester of mono-, di- or tri-(meth)acrylic acid with a $(C_2$-$C_{24})$polyethylene glycol, and more preferably selected from the group consisting of diethylene glycol di(meth)acrylate, poly(ethylene glycol) methyl ether (meth)acrylate, poly(ethylene glycol) di(meth)acrylate, tetra(ethylene glycol) di(meth)acrylate, tri(ethylene glycol) di(meth)acrylate, ethylene glycol di(meth)acrylate, and mixtures thereof.

In the present invention, the expression "(meth)acrylate monomer" includes all monomers with an acrylate and/or a methacrylate unit.

In this second embodiment, the electrolyte composition also comprises at least one photoinitiator or radical initiator. The radical initiator may be an azo compound such as azobisisobutyronitrile (AIBN) or dimethyl azobisisobutyrate (AIBME), or an organic peroxide such as benzoyl peroxide (BPO), di-tert-utyl peroxide, or methyl ethyl ketone peroxide. In a preferred embodiment, the electrolyte composition comprises at least one photoinitiator selected from the group consisting of 2-hydroxy-2-methyl-1-phenylpropan-1-one (for example sold under the name DAROCUR® 1173 by BASF), 2,2-dimethoxy-1,2-diphenylethan-1-one, 1-hydroxy-cyclohexyl-phenyl-ketone (for example sold under the name IRGACURE® 184 by Ciba Specialty Chemicals), benzophenone, 2-ethylhexyl-(4-N,N-dimethylamino)benzoate, ethyl-4-(dimethylamino)benzoate, phenylbis(2,4,6-trimethylbenzoyl)phosphine oxide (BAPO).

When the electrolyte is in the form of a crosslinked gel polymer, the latter acts both as an ion transport medium, and as a physical separator, so an additional physical separator is not required.

In this second embodiment, the metal-air battery cell therefore comprises:

- a negative electrode containing a negative-electrode active material,
- a positive electrode using oxygen as a positive-electrode active material, and
- a non-aqueous electrolyte medium arranged between the negative electrode and the positive electrode,

wherein the non-aqueous electrolyte medium comprises the electrolyte composition which is in the form of a crosslinked gel polymer as defined according to the second embodiment.

The method for preparing a crosslinked gel polymer electrolyte composition according to the invention, and preferably a UV-crosslinked gel polymer electrolyte composition, may comprise the step of irradiating an electrolyte composition according to the invention under UV light, preferably at a wavelength ranging from 200 to 600 nm, and more preferably from 300 to 400 nm, advantageously during 30 seconds to 15 minutes, and more advantageously during 30 seconds to 5 minutes.

The present invention also concerns the use of a compound of formula (1):

$$RO\text{-}CH_2\text{-}CH(OR')\text{-}CH_2\text{-}OR'' \qquad (1)$$

wherein: R, R' and R", identical or different, are $C_{1\text{-}6}$ alkyl chains, and preferably $CH_3$,
as solvent in an electrolyte composition for metal-air battery, preferably lithium-air battery, sodium-air battery, potassium-air battery, calcium-air battery, or magnesium-air battery, and more preferably lithium-air battery.

<Separator>

In the metal-air battery of the present invention, when the electrolyte composition of the invention is in a liquid form, a separator is present between the air cathode and the anode for complete electrical insulation between these electrodes. The separator is not particularly limited as long as it is able to electrically insulate the air cathode and the anode from each other and has a structure that allows the electrolyte to be present between the air cathode and the anode.

Examples of the separator include porous films and nonwoven fabrics comprising polyethylene, polypropylene, cellulose, polyvinylidene fluoride, glass ceramics, etc. Of these, a separator of glass ceramics is preferred.

<Battery case>

As the battery case for housing the rechargeable metal-air battery, general battery cases for rechargeable metal-air batteries can be used. The shape of the battery case is not particularly limited as long as it can hold the above-mentioned air cathode, anode and electrolyte. Specific examples of the shape of the battery case include a coin shape, a flat plate shape, a cylindrical shape and a laminate shape. It is possible for the battery of the present invention to be completely encased in an oxygen-permeable membrane, advantageously one which shows selectivity for oxygen diffusion over that of water.

<Use of the battery of the invention>

The metal-air battery of the invention can discharge when an active material, which is oxygen, is supplied to the air cathode. Examples of oxygen supply source include the air, dried air, a mixture of inert gas ($N_2$, Ar...) with oxygen or oxygen gas, and preferred is oxygen gas. The pressure of the supplied air, dried air or oxygen gas is not particularly limited and can be appropriately determined.

The metal-air battery of the present invention may be used as a primary battery or a rechargeable secondary battery.

The metal-air battery of the present invention may, for example, be put to practical use in a process wherein the battery is cycled between certain limits defined by initial and final voltage, or initial and final capacity or specific capacity. For example, one process for using a lithium-air battery of the present invention may consist of a process wherein:

(a) the lithium-air battery is provided in a fully charged state;
(b) the lithium-air battery is subjected to discharge until the specific capacity reaches a value X;
(c) the lithium-air battery is recharged;
(d) steps (b) and (c) are repeated.

It may be mentioned that in the case where $Li_2O_2$ or $Li_2O$ is contained in the cathode, a possibility mentioned hereinabove, the lithium-air battery as prepared will not initially be provided in a fully charged state, so that at least the first time the battery is used, cycling may not begin at step (a) as indicated above.

The specific capacity value X selected may vary widely and, for example, be situated in the range of 0.1 to 20 mAh/cm$^2$. The specific capacity of a lithium-air battery may be determined by discharging up until 2 V. It may be appropriate during operation of the battery to cycle the battery within limits that do not go to full discharge or charge. It may be advantageous to cycle the battery between 10% to 90% of its specific capacity (determined in step (b)), preferentially 20% to 80%, more preferably 20% to 70%. Cycling may also be carried out between certain limits of initial or maximum theoretical discharge capacity. Capacity-limited cycling may enable the cell to survive longer, and it may thus be appropriate to limit the cycling capacity to around 30% of the full discharge capacity.

It is possible to provide as a product, a battery whose air cathode contains added $Li_2O_2$. Such a battery would typically be charged before use.

The invention also aims at a battery pack comprising at least two assembled metal-air battery cells according to the invention.

The metal-air battery of the present invention can be used as a rechargeable metal battery for electric vehicles and hybrid vehicles, especially devices related to mobility, or in various electronic devices (such as computers and telephones), and stationary power generating devices, and more particularly for cars, bikes, scooters and drones.

The invention also aims at a vehicle, an electronic device, and a stationary power generating device, comprising a battery pack according to the invention.

Any combination of the above described elements in all possible variations thereof is encompassed by the invention unless otherwise indicated herein or otherwise clearly contradicted by context. Thus, all features and embodiments described herein in particular as applicable, advantageous or preferred in the context of the invention are to be construed as being applicable in combination with one another, in preferred embodiments of the invention.

Examples

Preparation of liquid electrolyte compositions:

Lithium bis(trifluoromethanesulfonyl)imide (LiTFSI) was mixed with a specific solvent at 1M concentration, and stirred for 2 hours. LiTFSI was previously vacuum-dried at 100°C for 24 hours.

Preparation of crosslinked gel polymer electrolyte compositions:

Liquid electrolyte compositions (80 wt%) previously prepared were then mixed with three different crosslinkers: glycerol propoxylate triacrylate (TA) (5 wt%), diethylene glycol diacrylate (DA) (5 wt%), and poly(ethylene glycol) methyl ether acrylate (PEGA) (10 wt%). The mixtures were stirred during one hour. DAROCUR® 1173 photoinitiator was added at this step at 3% w/w of monomers. Then, the solution was drop-casted on a silicon mould ($\Phi$ 11.28 mm circular voids) and irradiated with a UV-LED lamp for 6 minutes (300 - 400 nm, with peak at 385 nm. Lightningcure® V3, Hamamatsu). A 3D branched structure of polymeric chains trapping a liquid electrolyte was then obtained.

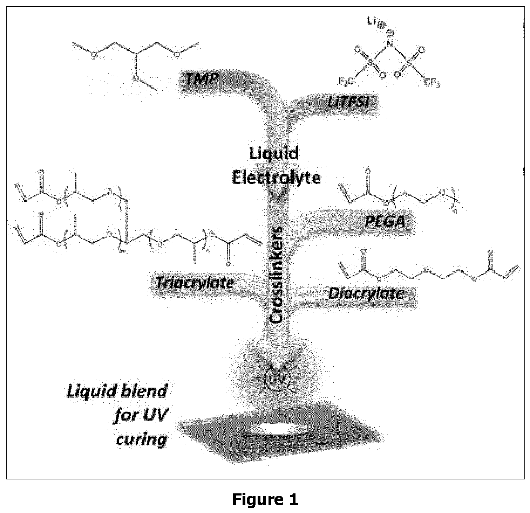

The preparation of the crosslinked gel polymer electrolyte compositions is illustrated in **Figure 1.**

The compositions of the following examples and comparative examples were as follows:

- Example 1 (E1): Liquid electrolyte composition with 1,2,3-trimethoxypropane (1,2,3-TMP) as solvent and LiTFSI as salt (1M),
- Example 2 (E2): Gel polymer electrolyte composition with 1,2,3-trimethoxypropane (1,2,3-TMP) as solvent and LiTFSI as salt (1M),
- Comparative Example (CE1): Liquid electrolyte composition with tetraethylene glycol dimethyl ether as solvent and LiTFSI as salt (1M), and
- Comparative Example (CE2): Gel polymer electrolyte with tetraethylene glycol dimethyl used ether as solvent and LiTFSI as salt (1M).

Preparation of $O_2$ electrodes:

Air electrodes were formed by a gas diffusion layer (GDL from Quintech (GER)) coated with a slurry containing Ketjen Black 600 carbon, LITHion™ dispersion binder, and anhydrous 2-propanol. The coated GDLs had an average carbon loading of 0.72 mg·cm$^{-2}$.

Assembly of the Li-Li cells:

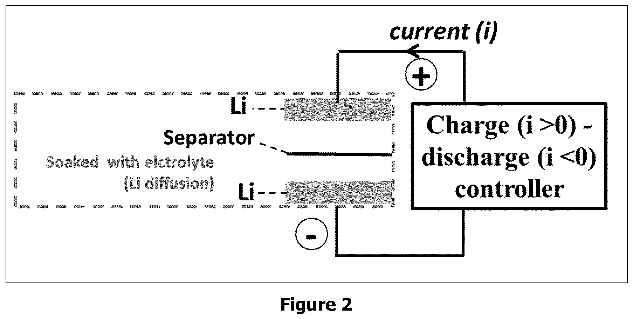

For Example 1 and Comparative Example 1 (E1 and CE1):
A glass fiber sheet, previously dried at 150°C under vacuum for 24 hours ($\Phi$ 11.28 mm, Whatman®, GF/A grade), was soaked with the liquid electrolyte mixture (200 $\mu$L) previously prepared before being sandwiched between two lithium foils, as illustrated in **Figure 2.**

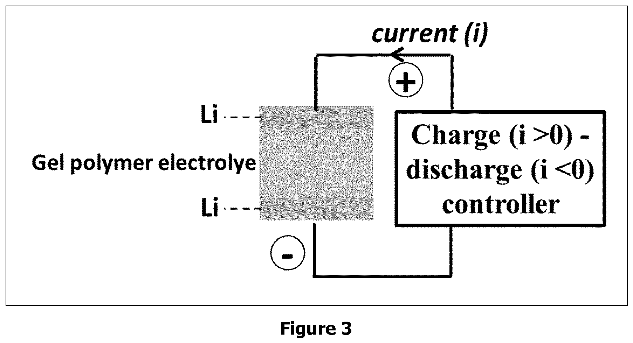

For Example 2 and Comparative Example 2 (E2 and CE2):
UV-crosslinked gel polymer electrolyte compositions were directly sandwiched between two lithium foils, as illustrated in **Figure 3.** This sandwich was then placed between two stainless steel spacers in the middle of stainless steel caps electronically isolated by a polyetheretherketone (PEEK) cylinder and tightened by 3 nut-bolt-insulator screws. A similar tightened of 2.2 N.m$^{-1}$ was applied on all samples thanks to a torque wrench. Thickness was controlled by a Teclock® thickness gauge in order to insure the flatness of each sample. This stack was then placed in an insulated glass container to ensure inert atmosphere during testing.

Assembly of the Li-$O_2$ cell:
Li-$O_2$ Swagelok cells were used and placed in specifically designed PEEK container. The GPE electrolytes ($\Phi$ 11.28 mm) were sandwiched between the negative and positive electrodes.

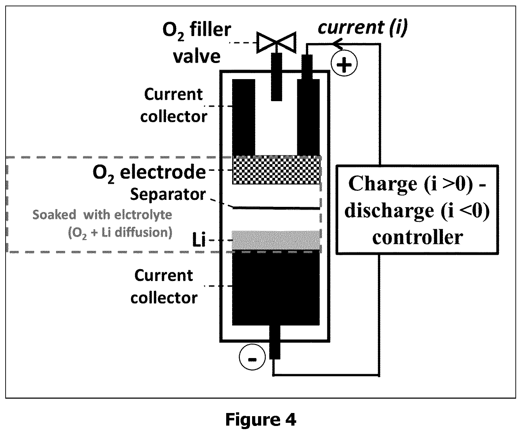

For Example 1 and Comparative Example 1 (E1 and CE1), two glass fiber sheets, previously dried at 150°C under vacuum for 24 hours ($\Phi$ 11.28 mm, Whatman®, GF/A grade), soaked with the liquid electrolyte mixture (200 $\mu$L) were used (**Figure 4**).

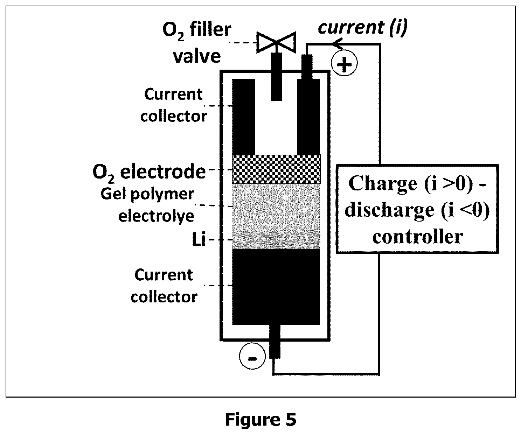

For Example 2 and Comparative Example 2, separators were not used (**Figure 5).** The positive electrode was placed with the coated side facing the electrolyte surface and an aluminum mesh was used as current collector. This stack was then sandwiched in a PEEK Swagelok cell. The argon gas inside the container was then purged and replaced by oxygen gas.

Ionic conductivity measurements by Electrochemical Impedance Spectroscopy (EIS):

The ionic conductivity was determined at different temperatures by EIS. The measurement was carried out with an Autolab 302N potentiostat galvanostat (Metrohm AG) with a temperature controller (Microcell HC station). The temperatures were set between 25°C and 85°C. Electrolyte compositions were sandwiched between two stainless steels electrodes. EIS was monitored using a frequency range of 0.1 Hz to 100 kHz with an amplitude of 10 mV.

Ionic conductivity measurements were done at least two times for each composition to assess the reproducibility of the obtained values. The ohmic resistance R, determined by fitting the impedance spectrum by an equivalent circuit, was used to calculate the ionic conductivity thanks to the following equation:

$$\sigma = L/(A * R),$$

where L is the thickness of the electrolyte and A the area of the stainless electrode respectively.

Galvanostatic discharge-charge on Li-$O_2$ cells:

Li-$O_2$ cells were cycled with cut-off potentials of 2 V (discharge) and 4.6 V (charge) or limited capacity of 0.2 mAh·cm$^{-2}$ to determine evolution of the polarization at $\pm$0.1 mA·cm$^{-2}$ and 60°C. Tests were started after 3h conditioning at Open Circuit Voltage (OCV).

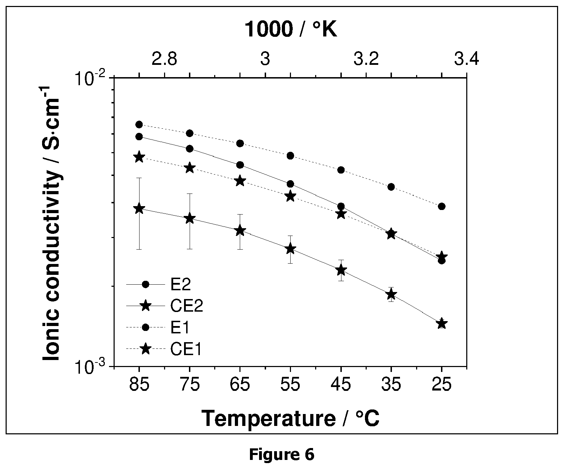

**Figure 6** shows the ionic conductivities obtained by EIS for electrolyte compositions E1, E2, CE1 and CE2. These results demonstrate that the ionic conductivity obtained with E1 and E2 are superior to ionic conductivity obtained with CE1 and CE2.

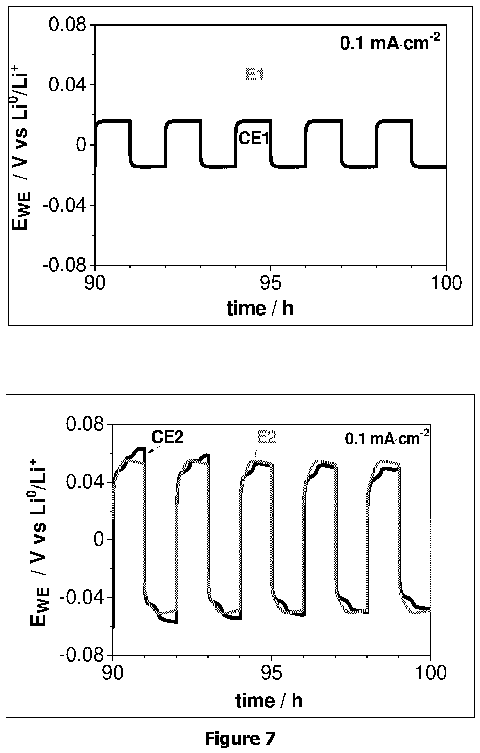

**Figure 7** illustrates the discharge-charge cycling performances of Li/Li cells respectively with liquid and crosslinked gel polymer electrolytes, performed at 0.1 mA/cm$^2$. This test evaluates the long-term stability with long cycling on lithium symmetrical cells at a fixed current rate. Li-$O_2$ cells were cycled at $\pm$0.1 mA·cm$^{-2}$ at 25°C for 250h, cut-off potential of $\pm$0.6 V and 3h conditioning at Open Circuit Voltage (OCV). The results demonstrate that the electrolyte compositions of the invention (both liquid and gel polymer electrolyte compositions) have comparable performances than tetraethylene glycol dimethyl ether to reduce potentials at the working Li metal anode.

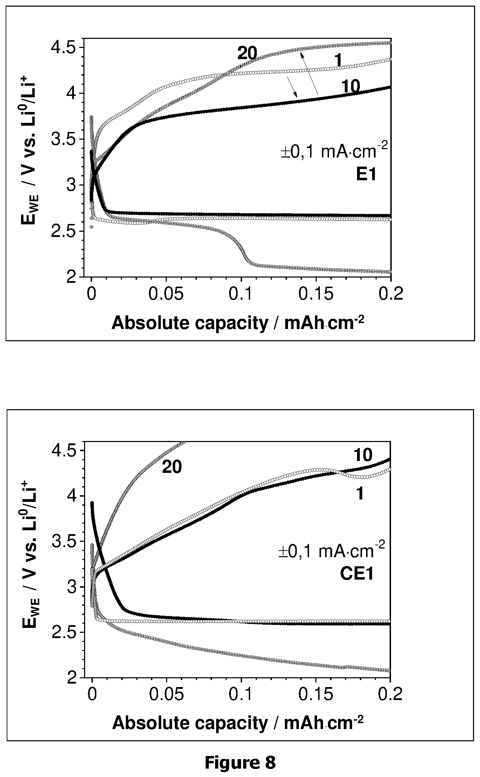

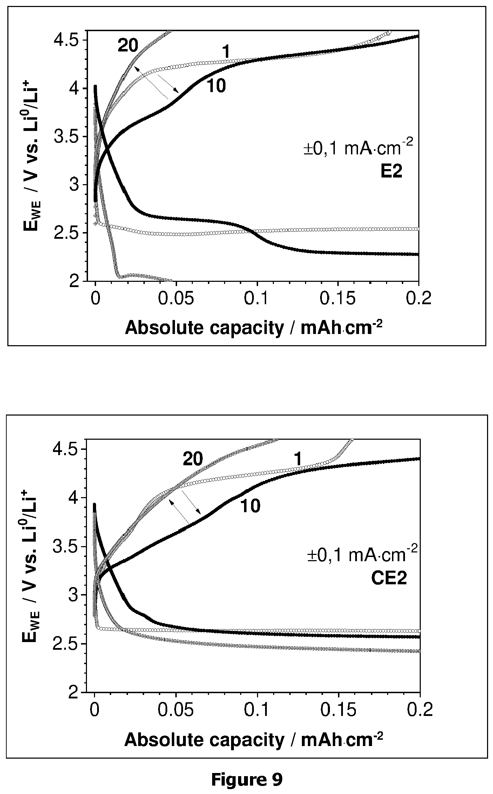

**Figures 8** and **9** illustrate the discharge-charge cycling performances of Li-$O_2$ cells with electrolytes according to the invention and comparative electrolytes. This test evaluates the capacity-limited cycle performance. Li-$O_2$ cells were cycled at $\pm$0.1 mA·cm$^{-2}$ with cut-off potentials of 2 V (discharge) and 4.6 V (charge), and limited capacity of 0.2 mAh·cm$^{-2}$ . Tests were started after 3h conditioning at Open Circuit Voltage (OCV). The results demonstrate that Li-$O_2$ cells with electrolytes according to the invention behave in a similar manner than Li-$O_2$ cells with comparative electrolytes: similar capacity and similar number of cycles were observed.

## Claims

1. Electrolyte composition comprising:

   (A) at least one solvent of formula (1):

   $$RO-CH_2-CH(OR')-CH_2-OR''\qquad(1)$$

   wherein: R, R' and R", identical or different, are C$_{1-6}$ alkyl chains, and preferably CH$_3$; and
   (B) at least one alkali metal salt.

2. Electrolyte composition according to claim 1, wherein the solvent of formula (1) is 1,2,3-trimethoxypropane (1,2,3-TMP).

3. Electrolyte composition according to claim 1 or claim 2, further comprising one or more co-solvents, preferably selected from the group consisting of: chain carbonates, cyclic ester carbonates, chain ethers, cyclic ethers, glycol ethers, and nitrile solvents, and preferably glycol ethers such as tetraethylene glycol dimethyl ether (TEGDME).

4. Electrolyte composition according to any one of claims 1 to 3, wherein the weight ratio between the solvent of formula (1) and the co-solvent(s) is:
   x solvent of formula (1) / (1 - x) co-solvent(s),
   wherein: $0 < x \leq 1$.

5. Electrolyte composition according to any one of claims 1 to 4, wherein the alkali metal salt (B) is selected from the group consisting of lithium salt, sodium salt, potassium salt, calcium salt and magnesium salt.

6. Electrolyte composition according to claim 5, wherein the alkali metal salt (B) is lithium salt, preferably selected from the group consisting of: LiTFSI, LiPF$_6$, LiBF$_4$, LiClO$_4$, LiFSI, LiBOB LiAsF$_6$, LiFAP, LiTriflate, LiDMSI, LiHPSI, LiBETI, LiDFOB, LiBFMB, LiBison, LiDCTA, LiTDI, LiPDI, and more preferably LiTFSI.

7. Electrolyte composition according to any one of claims 1 to 6, wherein the alkali metal salt (B) concentration ranges from 0.05 to 5 mol.L$^{-1}$, and preferably from 0.5 to 1.5 mol.L$^{-1}$.

8. Electrolyte composition according to any one of claims 1 to 7, wherein it is in a liquid form.

9. Electrolyte composition according to any one of claims 1 to 7, further comprising:

   - at least one crosslinker monomer, and
   - at least one photoinitiator or radical initiator, preferably at least one photoinitiator.

10. Electrolyte composition according to claim 9, wherein the crosslinker monomer is an $\alpha,\beta$-unsaturated carbonyl monomer, preferably a (meth)acrylate monomer, an anhydride or a (meth)acrylamide monomer, and more preferably a (meth)acrylate monomer.

11. Electrolyte composition according to claim 10, wherein the crosslinker monomer is a mono-, di- or tri-(meth)acrylate monomer, preferably an ester of mono-, di- or tri-(meth)acrylic acid with a linear or branched, alicyclic, aromatic or heterocyclic (C$_2$-C$_{24}$)alcohol, or an ester of mono-, di- or tri-(meth)acrylic acid with a (C$_2$-C$_{24}$)polyethylene glycol, more preferably an ester of mono-, di- or tri-(meth)acrylic acid with a (C$_2$-C$_{24}$)polyethylene glycol, and even more preferably selected from the group consisting of diethylene glycol di(meth)acrylate, poly(ethylene glycol) methyl ether (meth)acrylate, poly(ethylene glycol) di(meth)acrylate, tetra(ethylene glycol) di(meth)acrylate, tri(ethylene glycol) di(meth)acrylate, ethylene glycol di(meth)acrylate, and mixtures thereof.

12. Electrolyte composition according to any one of claims 9 to 11, wherein it is in the form of a crosslinked gel polymer, preferably a thermally or UV-crosslinked gel polymer, and more preferably a UV-crosslinked gel polymer.

13. A method for preparing a crosslinked gel polymer electrolyte composition according to claim 12, comprising the step of irradiating an electrolyte composition according to any one of claims 9 to 11 under UV light, preferably at a wavelength ranging from 200 to 600 nm, and preferably from 300 to 400 nm, during 30 seconds to 15 minutes, and preferably during 30 seconds to 5 minutes.

14. Use of a compound of formula (1):

$$RO\text{-}CH_2\text{-}CH(OR')\text{-}CH_2\text{-}OR'' \qquad (1)$$

wherein: R, R' and R'', identical or different, are C$_{1-6}$ alkyl chains, as solvent in an electrolyte composition for metal-air battery, preferably lithium-air battery, sodium-air battery, potassium-air battery, calcium-air battery, or magnesium-air battery, and more preferably lithium-air battery.

15. Use according to claim 14, wherein the compound of formula (1) is 1,2,3-trimethoxypropane (1,2,3-TMP).

16. A metal-air battery cell comprising:

   - a negative electrode containing a negative-electrode active material,
   - a positive electrode using oxygen as a positive-electrode active material, and
   - a separator interposed between the negative electrode and the positive electrode,

   wherein the separator is soaked by an electrolyte composition according to any one of claims 1 to 8.

17. A metal-air battery cell comprising:

   - a negative electrode containing a negative-electrode active material,
   - a positive electrode using oxygen as a positive-electrode active material, and
   - a non-aqueous electrolyte medium arranged between the negative electrode and the positive electrode,

   wherein the non-aqueous electrolyte medium comprises an electrolyte composition according to any one of claims 8 to 12.

18. A metal-air battery according to claim 16 or claim 17, which is a lithium-air battery, sodium-air battery, potassium-air battery, calcium-air battery, or magnesium-air battery.

19. A metal-air battery according to claim 18, which is a lithium-air battery.

20. A lithium-air battery cell according to claim 19, wherein the negative electrode comprises lithium, and is preferably selected from the group consisting of lithium (Li), lithium peroxide ($Li_2O_2$) or lithium oxide ($Li_2O$).

21. A lithium-air battery cell according to claim 19 or claim 20, wherein the positive electrode comprises carbon.

22. A battery pack comprising at least two assembled metal-air battery cells according to any one of claims 16 to 21.

23. Use of a battery pack according to claim 22 as a rechargeable battery for electric vehicles and hybrid vehicles, electronic devices, and stationary power generating devices, and preferably for cars, bikes, scooters and drones.

24. A vehicle, an electronic device, and a stationary power generating device, comprising a battery pack according to claim 22.

Figure 1

**Figure 2**

**Figure 3**

**Figure 4**

**Figure 5**

**Figure 6**

**Figure 7**

**Figure 8**

**Figure 9**

**EP 4 210 155 A1**

Europäisches Patentamt
European Patent Office
Office européen des brevets

# EUROPEAN SEARCH REPORT

Application Number

EP 22 30 5013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 406 339 A1 (SAMSUNG SDI CO., LTD.) 7 April 2004 (2004-04-07) | 1-8,14, 15 | INV. H01M12/08 |
| Y | * paragraph [0012] – paragraph [0018] * | 9-13 | H01M10/0569 |
| A | * paragraph [0022] – paragraph [0023] * * paragraph [0033] – paragraph [0035] * * paragraph [0038] – paragraph [0041] * * examples 1-9 * * claims 1-4, 6, 8-10 * | 16-24 | H01M10/0565 H01M10/052 |
| | ----- | | ADD. H01M4/38 H01M4/86 |
| Y | WO 2021/148835 A1 (TOYOTA MOTOR EUROPE; C.N.R.S.; UNIV. NANTES) 29 July 2021 (2021-07-29) | 9-13 | H01M4/96 H01M10/0568 |
| A | * page 5, lines 6-24 * * page 6, line 25 – page 7, line 25 * * page 8, lines 20-27 * * page 15, line 26 – page 16, line 8 * * page 19, line 16 – page 20, line 23 * * page 21, lines 18-24 * * page 23, lines 14-22 * * page 26, lines 6-17 * * claims 1, 2, 10, 14-17 * | 1-8, 14-24 | |
| | ----- | | TECHNICAL FIELDS SEARCHED (IPC) |
| A | US 2021/098828 A1 (UCHICAGO ARGONNE, LLC) 1 April 2021 (2021-04-01) * paragraph [0006] – paragraph [0007] * * paragraph [0025] – paragraph [0028] * * paragraph [0031] * * paragraph [0034] * * paragraph [0037] * * paragraph [0043] * * paragraph [0046] * * examples 1-4 * * claims 1, 2, 5-10 * | 1-24 | H01G H01M |
| | ----- | | |
| | -/-- | | |

The present search report has been drawn up for all claims

| Place of search | Date of completion of the search | Examiner |
|---|---|---|
| Munich | 22 June 2022 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

24

Europäisches
Patentamt

European
Patent Office

Office européen
des brevets

**EUROPEAN SEARCH REPORT**

Application Number

**EP 22 30 5013**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 637 541 A1 (NATIONAL INSTITUTE FOR MATERIALS SCIENCE) 15 April 2020 (2020-04-15) * paragraph [0010] * * paragraph [0019] – paragraph [0024] * * paragraph [0029] – paragraph [0030] * * paragraph [0053] – paragraph [0056] * * paragraph [0064] – paragraph [0069]; figure 1 * * examples 1-3, 9-14, C4-C8; table 1 * * claims 1, 10-12, 15 * ----- | 1-24 | |

TECHNICAL FIELDS
SEARCHED      (IPC)

The present search report has been drawn up for all claims

| Place of search | Date of completion of the search | Examiner |
|---|---|---|
| Munich | 22 June 2022 | Masson, Jean-Pierre |

EPO FORM 1503 03.82 (P04C01)

## ANNEX TO THE EUROPEAN SEARCH REPORT
## ON EUROPEAN PATENT APPLICATION NO.

EP 22 30 5013

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2022

| Patent document cited in search report | | Publication date | Patent family member(s) | | Publication date |
|---|---|---|---|---|---|
| EP 1406339 | A1 | 07-04-2004 | CN | 1487619 A | 07-04-2004 |
| | | | DE | 60304534 T2 | 26-04-2007 |
| | | | EP | 1406339 A1 | 07-04-2004 |
| | | | JP | 3980543 B2 | 26-09-2007 |
| | | | JP | 2004127943 A | 22-04-2004 |
| | | | KR | 20040031162 A | 13-04-2004 |
| | | | US | 2004067418 A1 | 08-04-2004 |
| WO 2021148835 | A1 | 29-07-2021 | NONE | | |
| US 2021098828 | A1 | 01-04-2021 | NONE | | |
| EP 3637541 | A1 | 15-04-2020 | EP | 3637541 A1 | 15-04-2020 |
| | | | JP | 6821217 B2 | 27-01-2021 |
| | | | JP | WO2018225434 A1 | 27-02-2020 |
| | | | US | 2020161709 A1 | 21-05-2020 |
| | | | WO | 2018225434 A1 | 13-12-2018 |

EPO FORM P0459

For more details about this annex : see Official Journal of the European Patent Office, No. 12/82

**EP 4 210 155 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5272022 A
- WO 2019128643 A
- US 7282295 B
- US 7491458 B
- WO 2013050717 A